Europäisches Patentamt

European Patent Office

Office européen des brevets

(11) Numéro de publication: **0 286 455**
**A1**

## DEMANDE DE BREVET EUROPEEN

(21) Numéro de dépôt: 88400019.1

(22) Date de dépôt: 06.01.88

(51) Int. Cl.⁴: **G 06 F 15/40**
**G 11 C 15/00, G 11 C 7/00**

(30) Priorité: 14.01.87 FR 8700605

(43) Date de publication de la demande:
**12.10.88 Bulletin 88/41**

(84) Etats contractants désignés:
**AT BE CH DE ES FR GB GR IT LI LU NL SE**

(71) Demandeur: **Université des Sciences et Techniques de LILLE Flandres Artois**
**F-59655 Villeneuve d'Ascq (FR)**

(72) Inventeur: **Grimonprez, Georges**
**3 Allée Tristan**
**Villeneuve d'Ascq (FR)**

**Loosfelt, Philippe**
**20 Allée du Camélia**
**Villeneuve d'Ascq (FR)**

**Balenghien, Thierry**
**386 rue du Brun-Pain**
**Tourcoing (FR)**

**Dubus, Jean-Paul**
**9 avenue du Parc**
**Sainghin en Melantois (FR)**

**Comyn, Gérard**
**15 rue Tardenois**
**Villeneuve d'Ascq (FR)**

(74) Mandataire: **Ecrepont, Robert**
**Cabinet Ecrepont 12 Place Simon Vollant (Porte de Paris)**
**F-59800 Lille (FR)**

Le titre de l'invention a été modifié (Directives relatives à l'examen pratiqué à l'OEB, A-III, 7.3)

(54) **Procédé de commande des cellules élémentaires d'une mémoire électronique.**

(57) L'invention se rapport à un procédé de commande notamment de validation des cellules élémentaires d'une mémoire électronique. Il est caractérisé en ce que, pour valider chaque cellule élémentaire (3) de mémoire, en vue d'une séquence donnée d'opérations d'exploitation des informations qu'elle contient, c'est par référence à des repères ainsi positionnés et non par adressage qu'on accède aux cellules contenant les informations recherchées.

Application à l'industrie du matériel électronique.

EP 0 286 455 A1

**Description**

## PROCEDE DE COMMANDE NOTAMMENT DE VALIDATION DES CELLULES ELEMENTAIRES D'UNE MEMOIRE ELECTRONIQUE NOTAMMENT ASSOCIATIVE

L'invention se rapporte à un procédé de commande notamment de validation des cellules élémentaires d'une mémoire électronique notamment associative.

Par cellule élémentaire de mémoire, on désigne ci-aprés tout moyen permettant de stocker une information élémentaire telle un caractère alphanumérique sous la forme d'un signal prédéterminé notamment constitué de chiffres binaires dits bits et plus généralement mais non limitativement d'un octet.

L'invention se rapporte également à un procédé de recherche dans une telle mémoire électronique d'un groupe prédéterminé d'informations, et, notamment d'une succession particulière d'informations élémentaires et ce, par exemple, en vue d'extraire de la dite mémoire électronique des informations associées à une suite prédéterminée d'autres informations.

L'invention se rapporte également aux moyens pour la mise en oeuvre de ce procédé ainsi qu'aux installations d'exploitation d'informations telles les micro-ordinateurs équipés de ces moyens.

On sait qu'une mémoire électronique se compose d'une pluralité de cellules élémentaires de mémoire.

Les mémoires connues sont généralement organisées en lignes indépendantes chacune composée d'une certain nombre de cellules élémentaires et de préférence, la mémoire électronique est associée à un processeur qui permet d'exploiter les informations qu'elle contient.

Pour échanger des informations, le processeur et la mémoire électronique sont reliés par une pluralité de conducteurs électriques couramment dénommées bus et généralement bus de données.

Généralement, le bus de données comprend autant de conducteurs électriques que chaque cellule mémoire élémentaire d'une ligne mémoire comprend de bits.

Des informations peuvent être réciproquement échangées entre le processeur et la mémoire électronique.

L'accés aux cellules élémentaires de mémoire a lieu de manière préétablie et, notamment les cellules de chaque ligne sont chacune repérables par une adresse qui dépend de la situation topologique de la ligne sur le bus de données et de la cellule au sein de la ligne.

Ces adresses ont également la forme de signaux électriques qui transitent entre le processeur et la mémoire par une pluralité de conducteurs électriques dénommées bus d'adresses.

Chaque adress permet de valider une cellule mémoire et une seule, et, notamment on admettra que cette adresse permet de commander le raccordement électrique de la cellule correspondante au bus de données.

Ainsi, lors d'une opération dite de lecture, le processeur peut commander successivement la transition sur le bus de données des informations successives contenues dans certaines cellules, par exemple en vue de leur affichage sur un écran, tout en préservant le contenu de chaque cellule concernée.

Egalement, lors d'une opération d'écriture, le processeur peut commander le transit dans une cellule donnée d'une information portée par le bus de données.

Lorsqu'elle concerne plusieurs informations successives d'une ligne, l'opération d'écriture est, comme celle de lecture, effectuée de manière ordonnée par le processeur, depuis l'adresse de la première des cellules élémentaires concernées par l'opération.

Une utilisation avantageuse des mémoires électroniques de ce type est la réalisation de fichiers.

Dans ces fichiers, des suites d'informations sont associées à des groupes d'informations et, par exemple, lorsque le fichier est un annuaire téléphonique de personnes, chaque suite d'informations qui représente un nom patronymique est associée à un groupe d'informations représentant un numéro de téléphone.

Pour effectuer dans une mémoire électronique la recherche d'une succession particulière et prédéterminée d'informations, on procède classiquement en comparant successivement (GB-A-1460431 et WO-A-86/00736) la suite d'informations recherchée à celles contenues dans chacune des différentes lignes de la mémoire, et ce pour détecter la et/ou les suites d'informations correspondant à celles recherchées puis, aprés avoir trouvé cette ligne, on commande la lecture du et/ou des groupes d'informations associés à chacune des suites repérées plus avant.

Certaines de ces mémoires électroniques (US-A-4.252.110 et GB-A-1460431) ont leurs cellules élémentaires chacune dotées d'une part d'un moyen permettant sur ordre du processeur de comparer leur contenu à une information présentée sur le bus de données et, d'autre part, d'un moyen repère tel un signal binaire permettant d'indiquer au processeur, si cela est, que l'information recherchée est contenue dans la cellule élémentaire de mémoire considérée.

Pour exploiter ces mémoires dites associatives, plusieurs stratégies de recherche sont aujourd'hui utilisées mais elles sont généralement basées sur le fait que les suites d'informations contenues en mémoire ont toutes une même longueur; la mémoire est ainsi scindée en lignes indépendantes de longueur définie.

Si les stratégies élaborées sur ces bases sont très efficaces, elles exigent donc des lignes de cellules mémoires spécifiques dans la mesure où chacune d'elles doit être capable de stocker plusieurs dizaines de bits.

Ces mémoires et leur stratégie d'exploitation sont souvent dédiées à des utilisations spécifiques. Elles sont donc très rigides et l'on ne peut pas adapter la capacité des lignes mémoires au nombre d'informations devant être associées dans une ligne.

Un résultat que l'invention vise à obtenir est un procédé de commande notamment de validation des cellules élémentaires de mémoire qui met en oeuvre des moyens physiques principalement internes à la dite mémoire et qui permet de s'affranchir des contraintes citées ci-dessus.

L'invention a pour objet un procédé notamment caractérisé en ce que :

- on constitue chaque ligne de la mémoire avec une seule cellule élémentaire telle que définie,

- à un moment quelconque précédant la première opération d'une séquence d'écriture, de lecture ou de comparaison en mémoire, on établit pour l'ensemble des cellules de la mémoire, un ordre topologique valable au moins pour le reste de l'ensemble des opérations de la séquence considérée,

- pour permettre la validation de cellules élémentaires consécutives en vue d'une séquence d'opérations, on positionne le repère associé à chaque cellule de la mémoire au moins en fonction d'un signal élaboré au niveau de la cellule voisine précédente et qui reflète l'état de son repère.

L'invention a également pour objet les moyens pour la mise en oeuvre du procédé plus avant évoqué et les installations d'exploitation d'informations ainsi équipées.

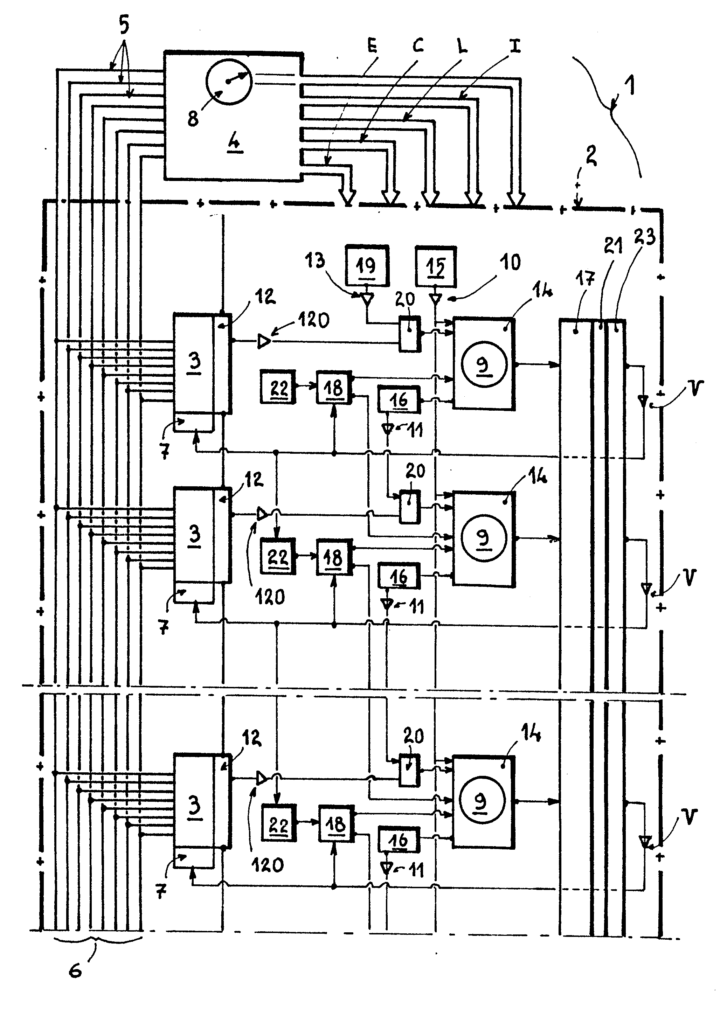

L'invention sera bien comprise à l'aide de la description ci-après faite à titre d'exemple non limitatif en regard du dessin ci-annexé qui représente schématiquement une installation équipée de moyens de mise en oeuvre de l'invention.

En se reportant au dessin, on voit qu'une installation d'exploitation 1 d'informations comprend au moins une mémoire électronique 2 constituée d'une multitude de cellules élémentaires de mémoire 3 qui permettant chacune de stocker une information telle un caractère alphanumérique sous la forme de signaux électriques, notamment constitués de chiffres binaires dits bits.

La mémoire électronique est associée à un processeur 4 qui permet d'exploiter les informations qu'elle contient.

Pour pouvoir échanger des informations, le processeur 4 et la mémoire 2 sont reliés par une pluralité de conducteurs électriques 5 couramment dénommées bus de données 6.

Les cellules élémentaires de la mémoire constituent des lignes mémoires indépendantes.

Le bus de données 6 compte autant de conducteurs électriques 5 que chaque cellule élémentaire d'une ligne de mémoire comprend de bits.

Chaque cellule élémentaire de mémoire comprend au moins un moyen 7 permettant de la valider pour une opération d'exploitation donnée, telle une opération de lecture de l'information qu'elle contient ou encore une opération d'écriture dans la dite cellule d'une information prédéterminée.

Pour la suite de la description, on considérera que cette validation correspond globalement au raccordement électrique de chaque cellule élémentaire 3 concernée, au bus de données 6 qu'elle jouxte.

Dans le cas d'une opération de lecture, la validation d'une cellule lui permet de générer sur le bus de données 6 un signal représentatif de l'information qu'elle contient.

Au contraire, dans le cas d'une opération d'écriture la validation d'une cellule permet de reporter dans celle-ci une information présentée sur le bus de données 6.

L'installation 1 comprend en outre une horloge 8 et au moins certaines des opérations internes à l'installation sont exécutées successivement à un rythme déterminé par la dite horloge en fonction de son cycle.

Par construction, est associé, à chaque cellule élémentaire 3 de mémoire, un repère 9 à deux positions tel un signal binaire.

Lors de la comparaison d'une information recherchée à celles contenues dans la mémoire, on positionne ce repère 9, c'est à dire on l'inhibe ou on l'active, en fonction du résultat de la dite comparaison.

Selon l'invention :

- on constitue chaque ligne de la mémoire avec une seule cellule élémentaire telle que définie,

- à un moment quelconque précédant la première opération d'une séquence d'écriture, de lecture ou de comparaison en mémoire, on établit pour l'ensemble des cellules de la mémoire, un ordre topologique valable au moins pour le reste de l'ensemble des opérations de la séquence considérée,

- pour permettre la validation de cellules élémentaires consécutives en vue d'une séquence d'opérations, on positionne le repère associé à chaque cellule de la mémoire au moins en fonction d'un signal V, 120, 11, 13 élaboré au niveau de la cellule voisine précédente et qui reflète l'état de son repère.

En vue d'une lecture ou écriture en séquence, c'est par référence à ces repères ainsi positionnés et non par adressage qu'on accède aux cellules et notamment :

- en fonction de la position activée ou inhibée des repères 9 associés aux cellules, on sélectionne au moins l'une d'elles puis,

- par un signal V prévu à cet effet, on valide pour chaque cellule élémentaire dont le repère 9 associé a été sélectionné, l'opération à effectuer sur le contenu de la dite cellule, c'est à dire soit la copie sur le bus de données de l'information qu'elle contient soit l'écriture dans la cellule de l'information présente sur le bus de données.

Par cette validation ou à l'issue de celle-ci, on réalise cette opération sur le contenu de la dite cellule.

Pour cela, quelle que soit l'opération à réaliser dans la mémoire, cette dernière reçoit du processeur une consigne adaptée et donc, selon le cas, une consigne d'écriture E de lecture L ou de comparaison C.

Chaque consigne adaptée C, E, L est généralement élaborée par le processeur lors de l'initialisation d'une séquence d'opérations choisie par l'opérateur.

Selon l'invention :

- pour positionner le repère 9 associé à chaque cellule, on surveille l'apparition non seulement d'au moins la consigne de commande globale 10 et d'un signal 11 ou 13 dit latent qui reflète l'état, lors de l'opération précédente, du repère de la cellule précédant celle considérée mais encore d'un certain nombre de facteurs que sont le signal de comparaison 120, le signal de validation V de la cellule précédant topologiquement celle considérée et l'une des consignés de lecture L, d'écriture E, de comparaison C, voire un éventuel signal I d'inhibition puis :

- lorsque c'est la consigne de commande globale 10 qui est détectée, on ramène tous les repères dans une même position d'inactivité,

- lorsque c'est la consigne de comparaison C qui est détectée, on tient compte du signal latent 11, 13 et du signal de comparaison 120,

- lorsque c'est l'une des consignes d'écriture E et de lecture L qui est détectée, on tient compte du signal de validation V de la cellule 3 topologiquement précédente à celle considérée.

Conformément à l'invention, pour pouvoir tenir compte du signal latent de manière optimale pour le fonctionnement de la mémoire, on stocke le résultat 120 de la comparaison effectuée sur chaque cellule au niveau de la cellule voisine suivante.

Pour sélectionnner au moins l'un des repères 9 élaborés, on surveille la position des repères et,

- dans le cas où tous les repères 9 sont inhibés, on ne valide aucune cellule 3,

- dans le cas où un seul repère est activé, on valide la cellule 3 correspondante,

- dans le cas où plusieurs repères 9 sont activés, on sélectionnne au moins le repère apparaissant topologiquement comme étant le premier au sein de la mémoire et on valide la cellule 3 correspondante.

De préfèrence, dans le cas où aucun repère 9 n'est activé, on le détecte et on génère au moins une information accessible au processeur pour l'informer de cet état.

Pour, à l'issue d'une opération quelconque d'exploitation d'information effectuée sur une cellule 3 donnée notamment une cellule 3 dont le repère 9 est dans une position dite activée, pouvoir réaliser une opération de nature sensiblement identique sur la cellule suivante:

- à l'issue de chaque opération d'exploitation, on inhibe le repère 9 de la cellule dont l'information a été exploitée et,

- on active le repère 9 de la dite cellule suivante sauf dans le cas d'une opération de comparaison s'il n'y pas identité entre l'information contenue dans la cellule et celle présentée sur le bus.

Cette disposition permet d'effecteur des séquences d'opération d'exploitation d'informations, telles des séquences de lecture ou d'écriture en mémoire à la manière de celles effectuées dans des mémoires classiques, c'est à dire en fonction de l'ordre topologique des cellules élémentaires.

Chaque cellule élémentaire 3 de mémoire comprend au moins un moyen 12 permettant d'une part de comparer l'information qu'elle contient à une information présentée sur le bus de données et, d'autre part, de générer au moins un signal 120 reflétant le résultat de cette comparaison.

Les moyens de comparaison 12 de l'ensemble des cellules élémentaires 3 peuvent, sans adressage particulier de chaque cellule, être activées simultanément pour la comparaison effective simultanée du contenu de toutes les cellules avec une information présentée sur le bus de données 6.

Une séquence de comparaison comprend généralement plusieurs opérations successives au cours de chacune desquelles une information prédéterminée est présentée sur le bus de données pour être comparée à celles contenues dans les cellules mémoires.

Une telle succession d'opérations permet de rechercher dans la mémoire une suite particulière d'informations données et ce particulièrement en vue d'extraire ultérieurement de cette mémoire un groupe d'informations associé à la dite suite prédéterminée d'informations.

Par exemple, cette séquence de recherche va permettre d'extraire de la mémoire le numéro de téléphone d'une personne en fonction de son nom.

Bien entendu, le groupe d'informations recherché aura été écrit en mémoire au moins au voisinage même de la suite d'informations à laquelle il est associé.

La mémoire peut contenir plusieurs suites identiques d'informations à celle ayant servie de clef de recherche mais chacune associée à un groupe différent d'informations.

Pour permettre au processeur de repérer au moins le dernière cellule de chaque suite prédéterminée d'informations qu'elle contient :

- au moins avant le début de la première opération de comparaison de chaque séquence de comparaison :

- en fonction d'une consigne préétablie, notamment d'une consigne 10 établie lors de l'initialisation de la séquence de comparaison commandée par l'opérateur, indépendamment du contenu de leur cellule 3, on positionne tous les repères 9 dans une même position,

. lors d'une étape préalable, on élabore au moins au niveau de la première des cellules élémentaires 3 de la mémoire, un signal dit primaire 13 pouvant ultérieurement être considéré au niveau de cette première cellule comme un signal issu d'une cellule fictive la précédant tel un signal latent 11 puis,

- on entame les opérations de comparaison et au moins à l'issue de chacune des dites opérations de comparaison d'une quelconque des dites informations de la suite recherchée,

. au niveau de chaque cellule élémentaire on influence l'état du repère 9 qui lui est associé en fonction d'au moins deux paramètres, le premier tributaire du résultat de la comparaison du contenu de la cellule considérée avec l'information présentée sur le bus de données 6, le second tributaire d'un signal tel le signal latent 11 et dont l'état reflète au moins celui du repère 9 associé à la cellule précédant topologiquement celle considérée mais ce lors de l'opération de traitement ayant chronologiquement précédé celle considérée.

De manière caractéristique, l'influence de l'état du repère 9 associé à chaque cellule 3 en fonction des deux paramètres précités tend notamment d'une part à activer le repère 9 de la cellule 3 considérée si chacun des deux paramètres se présente dans un même état d'activation et, d'autre part à inhiber le repère 9 de la cellule considérée si au moins l'un des deux paramètres se présente dans un état inhibé.

Tel que cela a été dit la mémoire peut contenir plusieurs suites identiques d'informations et donc à l'issue d'une séquence de comparaison, plusieurs repères peuvent être activés marquant ainsi chacune des dernières cellules reconnues d'une pluralité de cellules contenant la suite ayant fait l'objet d'une recherche.

Ainsi, pour accéder à chacun des groupes d'informations associé aux suites précités, il faut procéder sélectivement.

Selon l'invention pour, à l'issue d'une opération d'exploitation notamment une opération de comparaison ayant permis d'activer plusieurs repères 9 tels ceux qui marquent la dernière des cellules d'une suite recherchée figurant plusieurs fois dans la mémoire, pouvoir effectuer une opération de lecture et/ou d'écriture,
- lors d'une étape initiale, on surveille la position des repères 9 et, tel que cela a été prévu, on sélectionne le repère 9 qui apparaît comme étant topologiquement le premier puis,
- de manière également prévue, on commande successivement la validation d'au moins certaines des cellules 3 associées à celle dont le repère 9 a été sélectionné et notamment de celles du groupe associé à la suite ayant fait l'objet d'une recherche,
- à l'issue de l'opération d'exploitation réalisée sur la dernière des cellules 3 associées à celles dont le repère 9 a été sélectionné, par une consigne I, on inhibe le repère 9 de cette dernière cellule 3 et,
- on reprend le présent processus à son étape initiale.

Pour une meilleure compréhension, à titre d'exemple non limitatif d'utilisation de la mémoire conforme à l'invention, supposons qu'après avoir instauré un ordre topologique dans la mémoire, certaines des cellules élémentaires consécutives de mémoire, que l'on repèrera de $n_1$ à $n_{14}$, contiennent selon l'ordre indiqué les informations P,0,P,1,D,0,N,G,12,P,A,F,1,0. L'information "P" précédant les informations "0,P" est donc stockée dans la cellule $n_1$ tandis que l'information "0" qui suit les informations "P,A,F,1" est stockée dans la cellule $n_{14}$.

Si l'on souhaite rechercher dans la mémoire l'information ou le groupe d'informations associés à la suite P,A,F, on lance classiquement une séquence d'opérations de comparaison en commençant par exemple par la lettre "P", ce en ayant préalablement activé tous les repères des cellules de la mémoire.

Ainsi en fonction des résultats des comparaisons, tous les repères de cellules qui ne contiennent pas de "P" se retrouvent inhibés alors que ceux des cellules qui en contiennent sont maintenus activés (cellules $n_1$, $n_3$, $n_{10}$).

A ce stade on peut choisir de lire les informations associées à chaque cellule dont le repère a été activé.

A cet effet, selon la procédure de lecture et/ou d'écriture prévue, on sélectionne le repère qui apparaît comme étant topologiquement le premier puis on inhibe ce repère et on active celui de la cellule topologiquement suivante, ce qui permet alors la validation de ladite cellule et donc la lecture de l'information qu'elle contient et ainsi de suite.

De manière plus avantageuse, à l'issue de la première comparaison évoquée, on compare le "A" de "P,A,F", ce qui entraîne :
- l'inhibition du repère de toutes les cellules qui contenaient un "P" (cellules $n_1$, $n_3$, $n_{10}$),
- aucun changement au niveau des repères des cellules qui à la fois ne contiennent pas de "A" et ne sont pas précédées d'une cellule contenant un "P",
- l'activation de chaque cellule qui contenait un "A" et dont le repère de la cellule précédente avait été activé pour l'opération précédente (cellule $n_{11}$).

Ainsi chaque opération de comparaison permet d'éliminer les cellules qui n'ont pas d'antécédent.

La comparaison de la lettre "F" permettra donc d'activer le repère de la cellule $n_{12}$.

Si l'on souhaite lire les informations associées à la suite "P,A,F", il suffit par la procédure prévue pour la lecture et/ou l'écriture d'inhiber le repère de la cellule $n_{12}$, d'activer le repère de la cellule $n_{13}$, ce qui permet de valider ladite cellule pour une lecture qui fait apparaître l'information "1". Ensuite en inhibant le repère de la cellule $n_{13}$ puis en activant celui de la cellule $n_{14}$, on autorise la validation de la cellule $n_{14}$ et donc la lecture de l'information "0".

Il apparaît donc qu'une mémoire ainsi exploitée permet effectivement de stocker des groupes de longueurs quelconques d'informations associés à des suites également de longueurs quelconques d'autres informations pourvu que le nombre total des informations à stocker soit compatible avec la capacité de la mémoire, c'est-à-dire en rapport direct avec le nombre de cellules élémentaires qui constitue cette mémoire.

La recherche de groupes d'informations chacun associé à une et/ou des suites d'autres informations est optimisée par le fait qu'il n'y a pas d'adressage de cellule et que la mémoire n'est qu'une chaîne de lignes de cellules, chacune de capacité limitée au nombre de cellules qu'elle comprend.

Les moyens en vue de la mise en oeuvre de l'invention comprennent principalement :
- des moyens de positionnement du repère en fonction des variables que sont, d'une part, une consigne de commande globale 10 préétablie et d'autre part, un signal dit latent issu de la cellule précédente 11, 13 prédéterminée,
- associé à la mémoire 2 au moins un moyen 15 qui, au moins à partir de la consigne de comparaison C permet d'une part de générer au moins la consigne globale 10 et d'autre part en fonction de cette consigne 10, de ramener en position activée les repères 9 notamment au moins préalablement à une séquence de comparaison,
- associé à chaque cellule élémentaire 3, au moins un moyen 16 dit de mémorisation et qui permet d'une part lors d'une opération d'exploitation donnée de stocker une information telle un signal latent concernant l'état du repère 9 associée à une cellule donnée et, d'autre part, lors de l'opération d'exploitation suivante de restituer l'information concernant l'état du repère au niveau de la cellule suivante,

- associé à la mémoire 2, au moins un moyen 17 de sélection d'au moins l'une des cellules élémentaires 3 marquée par un repère et ce pour, notamment par un signal V, la valider s'il y a lieu en vue d'une éventuelle opération d'écriture et/ou de lecture,

- associé à chaque cellule mémoire 3, au moins un moyen 18 qui, à l'issue d'une opération de traitement réalisée sur une cellule donnée permet suivant un ordre topologique préétabli d'une part d'inhiber le repère 9 de la cellule dont l'information a été exploitée et d'autre part d'activer le repère de la cellule suivante,

- associé à la mémoire 9, au moins avant le début de la première opération d'une séquence de comparaison, au moins un moyen 19 d'élaboration d'un signal 13 dit primaire qui, au niveau de la première des cellules élémentaires de la mémoire, est considéré comme un signal latent 11 qui serait issu au niveau d'une cellule fictive la précédant et notamment apparaissant comme élaboré lors d'une opération de traitement précédant celle considérée,

- associé à chaque cellule élémentaire, au moins un moyen 20 d'une part d'activation du repère 9 associé à la cellule qu'il équipe, si le signal de comparaison émis au niveau de la dite cellule et le signal latent 11, 13 issu de la cellule précédente sont dans un même état d'activation et d'autre part d'inhibition du repère 9 associé à la cellule qu'il équipe, si au moins l'un des signaux précités est dans un état d'inhibition,

- associé à la mémoire, au moins un moyen 21 de commande selon un ordre topologique de la validation successive d'au moins un certain nombre des cellules associées à celles dont le repère activé a été sélectionné telles celles du groupe associé à la suite ayant fait l'objet d'une recherche,

- associé à la mémoire, au moins un moyen 22 d'inhibition du repère 9 de la dernière des cellules associées à celle dont le repère a été sélectionné,

- associé à la mémoire au moins un moyen 23 d'une part de détection de l'état inhibé de l'ensemble des repères et, d'autre part, de signalisation au processeur de cet état.

## Revendications

1. Procédé de commande notamment de validation des cellules élémentaires de mémoire (3) constituant les lignes de la mémoire électronique (2) d'une installation d'exploitation d'informations notamment au moyen d'un processeur (4) relié à la mémoire (3) par une pluralité de conducteurs électriques dits bus de données (6) laquelle exploitation des informations requiert des séquences d'opération successives et notamment,

- d'écriture d'informations dans les dites cellules mémoires élémentaires,

- de lecture des informations contenues dans les dites cellules,

- de comparaison des informations contenues dans les cellules avec une information prescrite sur le bus de données (6),

pour lesquelles opérations la mémoire (2) reçoit du processeur un certain nombre de consignes dont au moins celles respectivement adaptées à la commande de chacune des opérations précitées d'écriture (E), de lecture (L), de comparaison (C),

chaque cellule élémentaire (3) de mémoire comprenant d'un part au moins un moyen (12) permettant d'effectuer une comparaison entre le contenu de la dite cellule et une information présentée sur le bus de données puis d'élaborer au moins un signal reflétant le résultat de la comparaison (120) et d'autre part, au moins un moyen de validation (7), de la cellule et permettant lorsqu'il est activé par un signal extérieur (V) d'induire en quelque sorte le raccordement électrique au bus de la cellule mémoire qu'il équipe,

selon lequel procédé de commande qui est élaboré principalement pour faciliter dans une mémoire pouvant notamment comprendre plusieurs suites identiques d'informations, la recherche de groupes d'informations associés chacun à une suite donnée d'informations :

- par construction, on associe à chaque cellule élémentaire (3) de mémoire un repère (9) à deux positions tel un signal binaire,

- lors de la comparaison d'une information recherchée à celles contenues dans la mémoire (2), on positionnne ce repère c'est à dire on l'inhibe ou on l'active, en fonction du résultat de la dite comparaison,

ce procédé étant **CARACTERISE** en ce que :

- on constitue chaque ligne de la mémoire avec une seule cellule élémentaire telle que définie,

- à un moment quelconque précédant la première opération d'une séquence d'écriture, de lecture ou de comparaison en mémoire, on établit pour l'ensemble des cellules de la mémoire un ordre topologique valable au moins pour le reste de l'ensemble des opérations de la séquence considérée,

- pour permettre la validation de cellules élémentaires consécutives en vue d'une séquence d'opérations on positionne le repère associé à chaque cellule de la mémoire au moins en fonction d'un signal (V, 120, 11, 13) élaboré au niveau de la cellule voisine précédente et qui reflète l'état de son repère.

2. Procédé selon la revendication 1 caractérisé en ce que, en vue d'une lecture ou écriture en séquence, c'est par référence à ces repères ainsi positionnés et non par adressage qu'on accède aux cellules et notamment :

- en fonction de la position activée ou inhibée des repères (9) associés aux cellules, on sélectionne au moins l'une d'elles puis,

- notamment par un signal (V) prévu à cet effet, on valide pour chaque cellule élémentaire dont le repère (9) associé a été sélectionne, l'opération à effectuer sur le contenu de la dite cellule c'est à dire soit la copie sur le bus de données de l'information qu'elle contient soit l'écriture dans la cellule de l'information présente sur le bus de données.

3. Procédé selon la revendication 1 ou 2 caractérisé en ce que :

- pour positionner le repère (9) associé à chaque cellule, on surveille l'apparition non seulement d'au moins la consigne de commande globale (10) et d'un signal dit latent (11 ou 13) qui reflète l'état du repère de la cellule précédant celle considérée lors de l'opération précédente mais encore d'un certain nombre de facteurs que sont le signal de comparaison (120), le signal de validation (V) de la cellule précédant topologiquement celle considérée et l'une des consignes de lecture (L), d'écriture (E), de comparaison (C), voire un éventuel signal (I) d'inhibition puis :

- lorsque c'est la consigne de commande globale (10) qui est détectée, on ramène tous les repères dans une même position,

- lorsque c'est la consigne de comparaison (C) qui est détectée, on tient compte du signal latent (11, 13) et du signal de comparaison (120),

- lorsque c'est l'une des consignes d'écriture (E) et de lecture (L) qui est détectée, on tient compte du signal de validation (V) de la cellule (3) topologiquement précédente à celle considerée.

4. Procédé selon l'une quelconque des revendications 1 à 3 caractérisé en ce que, pour pouvoir tenir compte du signal latent de manière optimale pour le fonctionnement de la mémoire, on stocke le résultat (120) de la comparaison effectuée sur chaque cellule au niveau de la cellule voisine suivante.

5. Procédé selon l'une quelconque des revendications 1 à 4 caractérisé en ce que pour, à l'issue d'une opération quelconque d'exploitation d'information effectuée sur une cellule (3) donnée notamment une cellule (3) dont le repère (9) est dans une position dite activée, pouvoir réaliser une opération de nature sensiblement identique sur la cellule suivante:

- à l'issue de chaque opération, on inhibe le repère (9) de la cellule dont l'information a été exploitée et

- on active le repère (9) de la dite cellule suivante sauf dans le cas d'une opération de comparaison s'il n'y à pas identité entre l'information contenue dans la cellule et celle présentée sur le bus.

6. Procédé selon l'une quelconque des revendications 1 à 5 caractérisé en ce que :

- au moins avant le début de la première opération de comparaison de chaque séquence de comparaison :

. en fonction d'une consigne préétablie, notamment d'une consigne globale (10) établie lors de l'initialisation de la séquence de comparaison commandée par l'opérateur, indépendamment du contenu de leur cellule (3), on positionne tous les repères (9) dans une même position d'activité,

. lors d'une étape préalable, on élabore au moins au niveau de la première des cellules élémentaires (3) de la mémoire, un signal dit primaire (13) pouvant ultérieurement être considéré au niveau de cette première cellule comme un signal issu d'une cellule fictive la précédant tel un signal latent (11) puis,

- on entame les opérations de comparaison et au moins à l'issue de chacune des dites opérations de comparaison d'une quelconque des dites informations de la suite recherchée,

. au niveau de chaque cellule élémentaire on influence l'état du repère (9) qui lui est associé en fonction d'au moins deux paramètres, le premier tributaire du résultat de la comparaison du contenu de la cellule considérée avec l'Information présentée sur le bus de données (6), le second tributaire d'un signal, tel le signal latent (11) qui reflète l'état lors de l'opération de traitement ayant chronoliguement précédé celle considérée du repère (9) associé à la cellule précédant topologiquement celle considérée.

7. Procédé selon l'une quelconque des revendications 1 à 6 caractérisé en ce qu'on influence l'état du repère (9) associé à chaque cellule (3) en fonction des deux paramètres précités notamment d'une part en activant le repère (9) de la cellule (3) considérée si chacun des deux paramètres se présente dans un même état d'activation et, d'autre part en inhibant le repère (9) de la cellule considérée si au moins l'un des deux paramètres se présente dans un étant inhibé.

8. Procédé selon l'une quelconque des revendications 1 à 7 caractérisé en ce que pour, à l'issue d'une opération d'exploitation notamment une opération de comparaison ayant permis d'activer plusieurs repères (9) tels ceux qui marquent la dernière des cellules d'une suite recherchée figurant plusieurs fois dans la mémoire, pouvoir effectuer une opération de lecture et/ou d'écriture,

- lors d'une étape Initiale, on surveille la position des repères (9) et, tel que cela a été prévu, on sélectionne le repère (9) qui apparaît comme étant topologiquement le premier puis,

- de manière également prévue, on commande successivement la validation d'au moins certaines des cellules (3) associées à celles dont le repère (9) a été sélectionné et notamment de celles du groupe associé à la suite ayant fait l'objet d'une recherche,

- à l'issue de l'opération d'exploitation réalisée sur la dernière des cellules (3) associés à celles dont le repère (9) a été sélectionné, par une consigne (I), on inhibe le repère (9) de cette dernière cellule (3) et,

- on reprend le présent processus à son étape initiale.

9. Moyens pour la mise en oeuvre du procédé selon l'une quelconque des revendications 1 à 8 caractérisé en ce qu'ils comprennent :

- des moyens de positionnement du repère en fonction des variables que sont d'une part, une consigne de commande globale (10) préétablie et, d'autre part, un signal dit latent issu de la cellule précédente (11, 13) prédéterminé,

- associé à la mémoire (2), au moins un moyen (15) qui, au moins à partir de la consigne de comparaison (C), permet d'une part de générer au moins la consigne globale (10) et d'autre part en fonction de cette consigne (10), de ramener en position activée les repères (9) notamment au moins préalablement à une séquence de comparaison,

- associé à chaque cellule élémentaire (3), au moins un moyen (16) dit de mémorisation et qui permet d'une part lors d'une opération d'exploitation donnée de stocker une information telle un signal latent (11) concernant l'état du repère (9) associée à une cellule donnée et, d'autre part, lors de l'opération d'exploitation suivante de restituer l'information concernant l'état du repère mais ce au niveau de la cellule suivante,

- associé à la mémoire (2), au moins un moyen (17) de sélection d'au moins l'une des cellules élémentaires (3) marquée par un repère et ce pour, notamment par un signal (V), la valider s'il y a lieu en vue d'une éventuelle opération d'écriture et/ou de lecture,

- associé à chaque cellule mémoire (3), au moins un moyen (18) qui, à l'issue d'une opération de traitement réalisée sur une cellule donnée permet suivant un ordre topolologique préétabli d'une part d'inhiber le repère (9) de la cellule dont l'information a été exploitée et d'autre part d'activer le repère de la cellule suivante,

- associé à la mémoire (2), au moins avant le début de la première opération d'une séquence de comparaison, au moins un moyen (19) d'élaboration d'un signal (13) dit primaire qui, au niveau de la première des cellules élémentaires de la mémoire, est considéré comme un signal latent (11) qui serait issu au niveau d'une cellule fictive la précédant et notamment apparaissant comme élaboré lors d'une opération de traitement précédant celle considérée,

- associé à chaque cellule élémentaire, au moins un moyen (20) d'une part d'activation du repère (9) associé à la cellule qu'il équipe, si le signal de comparaison émis au niveau de la dite cellule et le signal latent (11, 13) issu de la cellule précédente sont dans un même état d'activation et d'autre part d'inhibition du repère (9) associé à la cellule qu'il équipe, si au moins l'un des signaux précités est dans un état d'inhibition,

- associé à la mémoire, au moins un moyen (21) de commande selon un ordre topologique de la validation successive d'au moins un certain nombre des cellules associées à celles dont le repère activé a été sélectionne telles celles du groupe associé à la suite ayant fait l'objet d'une recherche,

- associé à la mémoire, au moins un moyen (22) d'inhibition du repère (9) de la dernière des cellules associées à celle dont le repère a été sélectionné,

- associé à la mémoire au moins un moyen (23) d'une part de détection de l'état inhibé de l'ensemble des repères et, d'autre part, de signalisation au processeur de cet état.

0286455

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | WO-A-8 600 736 (AT & T)<br>* Page 1, ligne 1 - page 3, ligne 29; page 14, ligne 5 - page 18, ligne 35; revendications 1,4; figures 1,3,8 *<br>--- | 1-9 | G 06 F 15/40<br>G 11 C 15/00<br>G 11 C 7/00 |
| Y | US-A-4 257 110 (S. LAMB et al.)<br>* Colonne 2, ligne 48 - colonne 6, ligne 39; figure 1 *<br>--- | 1-9 | |
| Y | GB-A-1 460 431 (NATIONAL RESEARCH DEVELOPMENT CO.)<br>* Page 2, lignes 3-50; page 3, lignes 45-48; page 4, lignes 64-83; figures 1-4 *<br>--- | 1-9 | |
| A | FR-A-2 072 038 (IBM)<br>* En entier *<br>--- | 1-9 | |
| A | INPEC CONF. PAPER, ABSTRACT NR. C 87059765: PROCEEDINGS OF THE 20TH HAWAII INTERNATIONAL CONFERENCE ON SYSTEM SCIENCES 1987, Kailua-Kona, 6-9 janvier 1987, vol. 1, pages 293-302, HICSS, Honolulu, US; B.D. RATHI et al.: "The design of a self managing secondary memory"<br>* Résumé *<br>--- | 1,9 | **DOMAINES TECHNIQUES RECHERCHES (Int. Cl.4)**<br><br>G 06 F 15/00<br>G 11 C 15/00<br>G 11 C 7/00 |
| A | IEEE TRANSACTIONS ON COMPUTERS, vol. C-27, no. 9, septembre 1978, pages 800-815, IEEE, New York, US; C.V. RAMAMOORTHY et al.: "A design of a fast cellular associative memory for ordered retrieval"<br>---        -/- | | |

Le présent rapport a été établi pour toutes les revendications

| Lieu de la recherche | Date d'achèvement de la recherche | Examinateur |
|---|---|---|
| LA HAYE | 21-04-1988 | POPINEAU G.J.P. |

EPO FORM 1503 03.82 (P0402)